# FASCICULE DE BREVET EUROPEEN

(11) **EP 0 923 972 B1**
(45) Date de publication et mention de la délivrance du brevet: **14.04.2004**
(21) Numéro de dépôt: 98403188.0
(22) Date de dépôt: 17.12.1998
(51) Int. Cl.: B01D 29/11, B01D 29/54, B01D 29/90, B01D 29/92

(54) **Dispositif autolavable de séparation et de filtration de particules solides dans un débit de liquide et application à un circuit d'injection en carburant comportant un tel dispositif**
Selbstwaschbare Vorrichtung zur Trennung und Filtrierung von Feststoffpartikeln in einer Flüssigkeitsströmung und Verwendung in einem Kraftstoffeinspritzsystem mit einer solchen Vorrichtung
Selfwashable device for separating and filtering solid particles in a liquid flow and use in a fuel injection system provided with such a device

(30) Priorité: 18.12.1997 FR 9716058
(43) Date de publication de la demande: 23.06.1999
(73) Titulaire: HISPANO-SUIZA, 92700 Colombes (FR)
(72) Inventeur: Brocard, Jean-Marie, 77950 - Rubelles (FR); Le Texier, Michel François, 91860 - Epinay sous Senart (FR); Sartori, Alain, 77350 - Le Mee sur Seine (FR)
(74) Mandataire: Nguyen, Dominique

(56) Documents cités:
- US-A- 3 053 391
- US-A- 3 481 474
- US-A- 3 718 258
- US-A- 3 807 568
- US-A- 3 828 930

## Description

L'invention concerne un dispositif autolavable de séparation et de filtration de particules solides dans un débit de liquide et une application de ce dispositif dans un circuit d'injection en carburant.

Dans de nombreux dispositifs utilisant des liquides sous pression élevée, il faut que le liquide soit parfaitement filtré pour éviter l'usure provoquée par ses contaminants. Il est courant de satisfaire à cette condition au moyen d'une cartouche filtrante qui peut être remplacée lorsqu'elle est colmatée. Il est aussi courant de monter une soupape de dérivation qui permet de faire circuler le liquide en évitant une cartouche colmatée. L'état du filtre doit être contrôlé régulièrement de manière à éviter une détérioration rapide des appareils coûteux que le filtre est destiné à protéger.

Dans le cas particulier d'un système d'alimentation et de dosage du carburant d'une turbomachine comportant généralement une pompe à engrenages, par exemple de type volumétrique, un dispositif de dosage de débit et des injecteurs de carburant, il est nécessaire de protéger ce système d'une contamination externe provenant des réservoirs de carburant et de protéger le dispositif de dosage et les injecteurs de la contamination due à des particules d'usure produites par la pompe, voire à une dégradation de la pompe. Cependant, cette double protection ne peut pas être obtenue en utilisant un seul filtre. Par ailleurs, l'utilisation de deux filtres placés respectivement en amont et en aval de la pompe entraine des difficultés d'installation, une augmentation de la masse du moteur, des opérations de maintenance supplémentaires et une difficulté fonctionnelle due aux fortes pressions en aval de la pompe. Par ailleurs ces systèmes introduisent des pertes de charge non négligeables qui augmentent en fonction du degré de colmatage du filtre.

Pour s'affranchir des problèmes de maintenance du filtre disposé en aval de la pompe, il est possible d'utiliser un filtre autolavable. Les filtres autolavables connus comportent généralement une cartouche filtrante munie d'un conduit central dans lequel passe l'écoulement principal du débit de carburant. Pour alimenter les dispositifs de dosage et d'injection de carburant, une partie du carburant est prélevé dans le conduit central du filtre, puis est filtré au-travers la cartouche filtrante. L'inconvénient des filtres autolavables connus est que, pour que l'effet de lavage soit efficace, ils ne peuvent filtrer qu'une faible quantité de débit de carburant par rapport à la quantité de débit de carburant entrant dans le filtre. La quantité de débit de carburant filtré est généralement inférieure à 10% de la quantité totale du débit de carburant entrant dans le filtre. Par conséquent, le dimensionnement de la surface de la cartouche filtrante du filtre est d'autant plus important que la quantité de débit de carburant à filtrer est grande. Les filtres autolavables présentent donc généralement une masse et un encombrement important.

Il existe également des filtres autolavables à effet centrifuge tels que ceux décrits notamment dans les brevets US 3807 568 et US 3718 258. Cependant ces filtres présentent généralement des zones d'accumulation des particules polluantes, ce qui crée des pertes de charge de l'écoulement de liquide entre l'entrée et la sortie du filtre.

Le but de l'invention est de réaliser un dispositif autolavable de séparation et de filtration de particules solides dans un débit de liquide présentant un encombrement et une masse réduite et permettant d'augmenter le rapport entre la quantité de débit de liquide filtré et la quantité de débit de liquide entrant dans le filtre tout en assurant un lavage efficace de la toile filtrante.

Pour cela, l'invention concerne un dispositif autolavable de séparation et de filtration dans lequel les particules solides les plus denses sont séparées par effet centrifuge pour préserver la toile filtrante d'une trop grande pollution. Les particules solides séparées sont directement acheminées vers la sortie du filtre et le débit de liquide qui traverse la toile filtrante ne contient que des particules solides résiduelles de faible densité qui restent piégées en faible proportion à la surface de la toile filtrante, la plupart des particules étant entraînée par la vitesse de fluide parallèlement à la surface de la toile.

Selon l'invention, le dispositif autolavable de séparation et de filtration de particules solides dans un débit de liquide est défini par les caractéristiques de la revendication 1.

L'invention concerne également une application du dispositif autolavable à un circuit d'injection en carburant caractérisée en ce que l'entrée tangentielle de liquide est reliée en aval d'une pompe haute pression, la sortie tangentielle de liquide est reliée en amont d'un filtre principal par l'intermédiaire d'une soupape de dérivation, la sortie longitudinale de liquide filtré est reliée à un dispositif de dosage de carburant.

D'autres particularités et avantages de l'invention apparaitront clairement dans la suite de la description donnée à titre d'exemple non limitatif et faite en regard des figures annexées qui représentent :
- la figure 1, une vue schématique en perspective d'un premier exemple du dispositif autolavable de séparation et de filtration de particules dans un débit de liquide,
- la figure 2, une vue schématique en perspective d'un deuxième exemple de dispositif autolavable de séparation et de filtration de particules,
- la figure 3, une vue schématique en coupe transversale d'un troisième exemple de dispositif autolavable de séparation et de filtration de particules, selon l'invention,
- la figure 4, une vue schématique en coupe longitudinale du troisième exemple de dispositif autolavable de séparation et de filtration de particules,
- la figure 5, un schéma d'un exemple d'application du dispositif autolavable de séparation et de filtration de particules dans un circuit d'injection en carburant.

Le dispositif autolavable de séparation et de filtration de particules solides dans un débit de liquide comporte un carter 10 de forme tubulaire comportant une paroi périphérique, une paroi supérieure, une paroi inférieure, une chambre interne 11 délimitée par lesdites parois du carter, une entrée tangentielle 12 de liquide débouchant dans la chambre interne 11 à proximité de la paroi supérieure du carter 10 et une sortie tangentielle 13 de liquide aménagé à proximité de la paroi inférieure du carter 10. Une toile filtrante tubulaire 14 est montée longitudinalement dans la chambre interne 11, entre les parois supérieure et inférieure. La toile filtrante 14 comporte un conduit central longitudinal 15 débouchant en au moins une sortie longitudinale 16 de liquide filtré, la sortie longitudinale 16 étant aménagée dans la paroi supérieure et/ou inférieure du carter 10.

La configuration tangentielle de l'entrée de liquide 12 permet de créer un vortex dans la chambre interne 11 pour séparer les particules solides les plus lourdes par effet centrifuge et les entrainer vers la sortie tangentielle 13 de fluide. Le débit de liquide qui traverse la toile filtrante ne comporte que des particules résiduelles de faible densité ce qui permet de préserver la toile filtrante d'une trop grande pollution et d'augmenter la quantité de débit de liquide filtré par rapport au débit de liquide d'entrée sans augmenter l'encombrement du dispositif autolavable de séparation et de filtration.

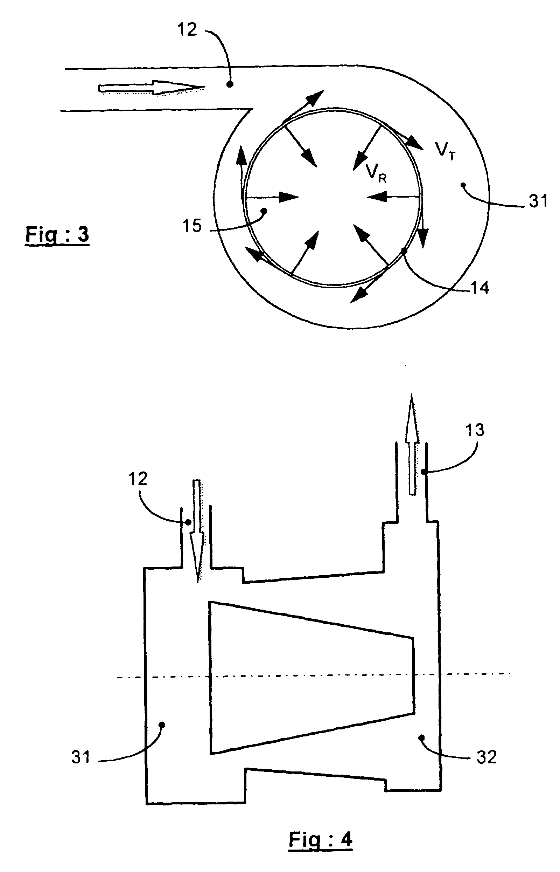

Préférentiellement, comme représenté sur la figure 3, au niveau de l'entrée tangentielle 12 de liquide, la surface intérieure du carter est en forme de spirale pour constituer une volute 31. Cette forme permet de maintenir constantes les vitesses d'écoulement radiales VR et tangentielles VT du débit de liquide autour de la toile filtrante 14, ce qui assure une répartition uniforme du débit de liquide filtré sur toute la surface latérale de la toile filtrante et une répartition uniforme de la vitesse tangentielle VT de lavage afin d'éviter la présence de zones d'accumulation des polluants.

Au niveau de la sortie tangentielle 13 de liquide, la surface interne du carter est également en spirale pour constituer une volute 32 de forme inversée par rapport à celle de la volute d'entrée afin de faciliter l'évacuation des particules solides vers la sortie tangentielle 13.

Avantageusement, l'entrée 12 peut être une ouverture de faible épaisseur occupant toute la longueur du carter 10 afin que le VORTEX ait une vitesse de rotation homogène dans toute la chambre 11.

Avantageusement, comme représenté sur la figure 4, entre les volutes d'entrée et de sortie, les sections internes du carter 10 sont croissantes et celles de la toile filtrante 14 sont décroissantes afin de minimiser les pertes de charge de l'écoulement de liquide entre l'entrée tangentielle et la sortie tangentielle de liquide.

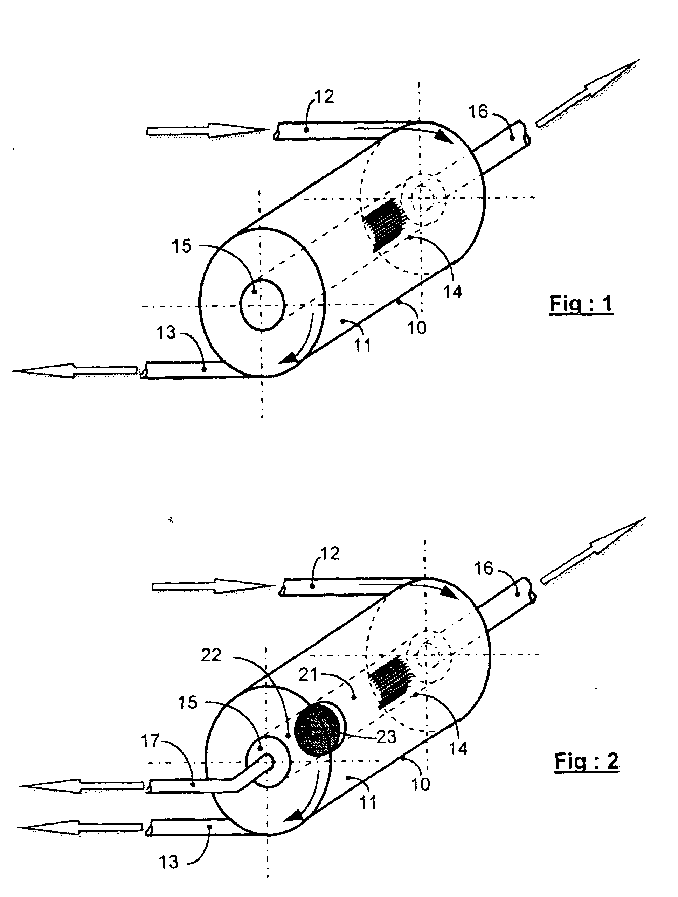

Pour une application à un circuit d'alimentation en carburant comportant un dispositif d'injection de carburant pour lequel le débit de carburant peut être filtré grossièrement, par exemple à 300µm, et des dispositifs d'asservissement pour lesquels le débit de carburant doit être filtré finement, par exemple entre 70 et 100µm, la toile filtrante est avantageusement constituée, comme représenté sur la figure 2, par la combinaison de deux zones de filtration 21, 22 ayant des pouvoirs d'arrêt différents. Les deux zones de filtration sont disposées dans la même chambre interne 11 du carter 10 et séparées par une cloison de séparation étanche 23. La première zone de filtration 21 ayant un pouvoir d'arrêt grossier comporte un conduit central longitudinal débouchant en une première sortie longitudinale 16 de liquide filtré aménagée dans la paroi supérieure du carter 10 et destinée à être reliée au dispositif d'injection de carburant filtré. La deuxième zone de filtration 22 ayant un pouvoir d'arrêt plus fin comporte un conduit central longitudinal débouchant en une deuxième sortie longitudinale 17 de liquide filtré aménagée dans la paroi inférieure du carter 10 et destinée à être reliée aux dispositifs d'asservissement.

En fonctionnement, un débit de liquide contenant des particules solides à séparer et à filtrer arrive sous haute pression dans la chambre interne 11 du carter 10 par l'entrée tangentielle 12 avec une vitesse tangentielle VT par rapport à la toile filtrante 14. Le débit de liquide est entrainé dans un mouvement hélicoïdal créant un vortex dans la chambre interne 11 entre la toile filtrante 14 et la paroi périphérique du carter 10. Sous l'effet des efforts centrifuges, les particules solides les plus denses contenues dans le débit de liquide sont propulsées vers l'extérieur du vortex le long de la paroi périphérique du carter 10, puis vers la paroi inférieure du carter 10. Ces particules solides denses sont, pour la plupart, évacuées directement vers la sortie tangentielle 13 de liquide. Le débit de liquide débarrassé des particules solides les plus denses mais contenant des fines particules solides résiduelles est entrainé au centre du vortex avec une vitesse tangentielle élevée par rapport à la surface de la toile filtrante.

Une première partie du débit de liquide située au centre du vortex traverse les mailles de la toile filtrante 14 à la surface de laquelle les particules solides résiduelles restent piégées. Le débit de fluide filtré débouche dans le conduit central longitudinal de la toile filtrante, puis est acheminé vers la sortie longitudinale de liquide filtré. La deuxième partie du débit de liquide est dirigée vers la sortie tangentielle 13 du liquide avec une vitesse tangentielle élevée par rapport à la surface de la toile filtrante 14. Au passage, cette deuxième partie du débit de liquide enlève les fines particules piégées à la surface de la toile filtrante et les entraine vers la sortie tangentielle 13 de liquide, ce qui a pour effet de laver la toile filtrante en permanence pendant toute la durée de fonctionnement du dispositif de séparation et de filtration. Cette deuxième partie du débit de liquide non filtré entraine également progressivement les particules solides les plus denses propulsées à l'extérieur du vortex, vers la sortie tangentielle 13 de liquide.

La séparation des particules polluantes au moyen d'une centrifugation permet d'éloigner ces particules polluantes de la toile filtrante et d'augmenter la quantité de débit de liquide prélevé au travers de la toile filtrante par rapport à la quantité du débit de lavage de la toile filtrante tout en conservant un effet de lavage efficace. Le renforcement de l'effet de lavage par l'effet séparateur permet d'augmenter le rapport de débit filtré jusqu'à 50% du débit entrant sans augmenter les dimensions de la surface de la toile filtrante. Le dispositif de séparation et de filtration permet un gain de masse et d'encombrement et permet de mieux garantir l'inutilité d'une surveillance ou d'une opération de maintenance.

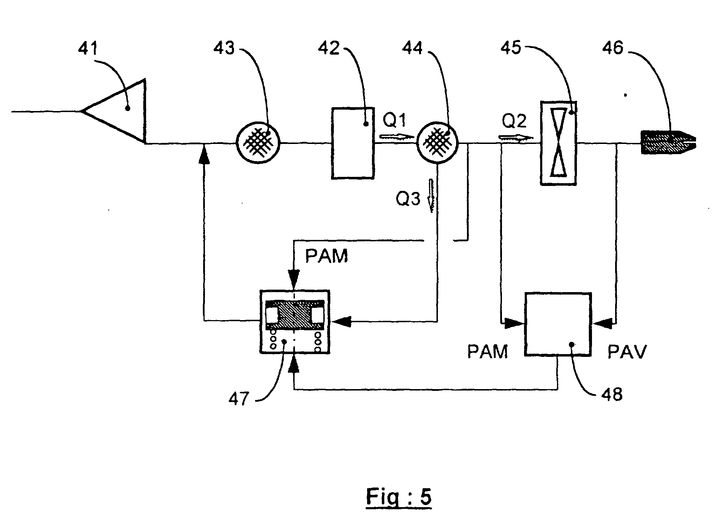

La figure 5 représente un schéma d'un exemple d'application du dispositif de séparation et de filtration dans un circuit d'injection en carburant.

Le circuit d'injection en carburant comporte une pompe basse pression 41 qui reçoit du carburant d'une pompe de gavage non représentée située dans un réservoir de carburant. Ce débit de carburant est envoyé à une pompe haute pression 42 au travers d'un filtre principal 43 situé en amont.

En aval de la pompe haute pression, le débit de carburant Q1 traverse un dispositif de séparation et de filtration autolavable 44 conforme à l'invention. Le dispositif de séparation et de filtration 44 comporte une entrée et une sortie tangentielle de carburant et une toile filtrante munie d'un conduit central longitudinal débouchant sur une sortie longitudinale de liquide filtré. La sortie longitudinale est raccordée à un dispositif de dosage de carburant 45 en sortie duquel le débit de carburant dosé est dirigé vers des injecteurs de carburant 46. Au niveau du dispositif de séparation et de filtration 44, un prélèvement de débit de carburant Q2 est effectué au travers de la toile filtrante pour alimenter le dispositif de dosage de carburant. Le débit de carburant non prélevé Q3 est évacué vers la sortie tangentielle de carburant en entrainant toutes les particules solides séparées par effet centrifuge et toutes les particules piégées à la surface de la toile filtrante. Le débit de carburant Q3 est ensuite dirigé en retour au travers d'une soupape de dérivation 47 vers l'amont du filtre principal 43. L'ouverture de la soupape de dérivation 47 est commandée par un détecteur de différence de pression 48 branché en parallèle avec le dispositif de dosage 45. La commande délivrée par le détecteur de différence de pression 48 est élaborée de manière à maintenir constante la différence de pression PAV-PAM aux bornes du dispositif de dosage 45.

Les dispositifs d'asservissement ne sont pas représentés sur le circuit d'injection de carburant de la figure 5 et le dispositif autolavable a une structure conforme à celle représentée à la figure 1.

Pour une application à un circuit d'injection de carburant comportant des dispositifs d'asservissement, le dispositif autolavable doit avoir une structure conforme à celle représentée à la figure 2.

## Revendications

1. Dispositif autolavable de séparation et de filtration de particules solides dans un débit de liquide, comportant :
- un carter (10) de forme tubulaire, comportant une paroi périphérique, une paroi supérieure, une paroi inférieure,
- une chambre interne (11) délimitée par les parois du carter (10),
- une entrée tangentielle (12) de liquide débouchant dans la chambre interne (11) à proximité de la paroi supérieure du carter (10), la configuration tangentielle de l'entrée permettant de créer un vortex dans la chambre interne (11) pour séparer les particules solides par effet centrifuge et les propulser à la périphérie du vortex,
- une sortie tangentielle (13) de liquide aménagée à proximité de la paroi inférieure du carter (10) pour évacuer les particules solides,
- une toile filtrante tubulaire (14) montée longitudinalement dans la chambre interne (11) entre les parois supérieure et inférieure du carter pour prélever et filtrer une partie du liquide située au centre du vortex, la toile filtrante comportant un conduit central longitudinal (15) débouchant en au moins une sortie longitudinale (16) de liquide filtré,
- et **caractérisé en ce que** au niveau de l'entrée tangentielle (12) de liquide, le carter (10) comporte une surface interne en forme de spirale pour constituer une volute (31) d'entrée.

2. Dispositif autolavable selon la revendication 1, **caractérisé en ce que**, au niveau de la sortie tangentielle (13) de liquide, le carter comporte une surface interne en forme de spirale pour constituer une volute (32) de sortie.

3. Dispositif autolavable selon la revendication 2, **caractérisé en ce que**, entre les volutes (31, 32) d'entrée et de sortie, le carter (10) comporte une section interne croissante et la toile filtrante (14) comporte une section interne décroissante.

4. Dispositif autolavable selon la revendication 1, **caractérisé en ce que** la toile filtrante (14) est constituée d'une première et d'une deuxième zones de filtration (21, 22) ayant des pouvoirs d'arrêt différents, la première zone de filtration (21) comportant un premier conduit central longitudinal débouchant en une première sortie longitudinale (16) de liquide filtré aménagée dans la paroi supérieure du carter (10), la deuxième zone de filtration (22) comportant un deuxième conduit central longitudinal débouchant en une deuxième sortie longitudinale (17) de liquide filtré aménagée dans la paroi inférieure du carter (10).

5. Dispositif autolavable selon la revendication 4, **caractérisé en ce que** les première et deuxième zones de filtration (21, 22) sont séparées par une cloison de séparation étanche (23).

6. Application du dispositif autolavable selon l'une quelconque des revendications 1 à 3 à un circuit d'injection en carburant, **caractérisée en ce que** l'entrée tangentielle (12) de liquide est reliée en aval d'une pompe haute pression, la sortie tangentielle (13) de liquide est reliée en amont d'un filtre principal (43) par l'intermédiaire d'une soupape de dérivation (47), la sortie longitudinale de liquide filtré est reliée à un dispositif de dosage de carburant (45).

7. Application du dispositif autolavable selon la revendication 5 à un circuit d'injection en carburant, **caractérisé en ce que** l'entrée tangentielle (12) de liquide est reliée en aval d'une pompe haute pression, la sortie tangentielle (13) de liquide est reliée en amont d'un filtre principal (43) par l'intermédiaire d'une soupape de dérivation (47), la première sortie longitudinale (16) de liquide filtré est reliée à un dispositif de dosage de carburant (45), la deuxième sortie longitudinale (17) de liquide filtré est reliée à des dispositifs d'asservissement.

## Claims

1. Self-washing device for separating and filtering solid particles in a liquid flow, comprising:
- a case (10) of tubular shape, comprising a peripheral wall, an upper wall and a lower wall;
- an internal chamber (11) bounded by the walls of the case (10);
- a tangential liquid inlet (12) running into the internal chamber (11) near the upper wall of the case (10), the tangential configuration of the inlet making it possible to create a vortex in the internal chamber (11) in order to separate the solid particles by centrifugal effect and to repel them to the periphery of the vortex;
- a tangential liquid outlet (13) provided near the lower wall of the case (10) in order to discharge the solid particles;
- a tubular filter cloth (14) mounted longitudinally in the internal chamber (11) between the upper and lower walls of the case in order to remove and filter some of the liquid located at the centre of the vortex, the filter cloth having a longitudinal central duct (15) running out into at least one longitudinal outlet (16) for filtered liquid;
- and **characterized in that** the case (10) has, at the tangential liquid inlet (12), an internal surface in the form of a spiral in order to constitute an inlet volute (31).

2. Self-washing device according to Claim 1, **characterized in that** the case has, at the tangential liquid outlet (13), an internal surface in the form of a spiral in order to constitute an outlet volute (32).

3. Self-washing device according to Claim 2, **characterized in that**, between the inlet and outlet volutes (31, 32) the case (10) has an increasing internal cross section and the filter cloth (14) has a decreasing internal cross section.

4. Self-washing device according to Claim 1, **characterized in that** the filter cloth (14) is formed from first and second filtration regions (21, 22) having different stopping powers, the first filtration region (21) having a first longitudinal central duct running out into a first longitudinal outlet (16) for filtered liquid, provided in the upper wall of the case (10), and the second filtration region (22) having a second longitudinal central duct running out into a second longitudinal outlet (17) for filtered liquid, provided in the lower wall of the case (10).

5. Self-washing device according to Claim 4, **characterized in that** the first and second filtration regions (21, 22) are separated by an impermeable separating partition (23).

6. Application of the self-washing device according to any one of Claims 1 to 3 to a fuel injection circuit, **characterized in that** the tangential liquid inlet (12) is connected downstream of a high-pressure pump, the tangential liquid outlet (13) is connected upstream of a main filter (43) via a bypass valve (47) and the longitudinal outlet for filtered liquid is connected to a fuel metering device (45).

7. Application of the self-washing device according to Claim 5, to a fuel injection circuit, **characterized in that** the tangential liquid inlet (12) is connected downstream of a high-pressure pump, the tangential liquid outlet (13) is connected upstream of a main filter (43) via a bypass valve (47), the first longitudinal outlet (16) for filtered liquid is connected to a fuel metering device (45) and the second longitudinal outlet (17) for filtered liquid is connected to servocontrol devices.

## Patentansprüche

1. Selbstreinigende Vorrichtung zur Abscheidung und Filterung von festen Partikeln in einer Flüssigkeitsmenge, die aufweist:
- ein rohrförmiges Gehäuse (10) mit einer außen umlaufenden Wand, einer oberen Wand, einer unteren Wand,
- eine Innenkammer (11), die von diesen Wänden des Gehäuses (10) umgrenzt wird,
- einen tangentialen Einlass (12) für Flüssigkeit, der im Bereich der oberen Wand des Gehäuses (10) in die Innenkammer (11) mündet, wobei durch die tangentiale Konfiguration des Einlasses in der Innenkammer (11) ein Wirbel erzeugt werden kann, um die festen Partikel durch Zentrifugalwirkung abzuscheiden und an den Außenumfang des Wirbel zu treiben,
- einen tangentialen Ausgang (13) für Flüssigkeit, der im Bereich der unteren Wand des Gehäuses (10) ausgeführt ist, um die festen Partikel abzuführen,
- einen röhrenförmigen Filterstoff (14), der in der Innenkammer (11) längs zwischen der oberen und der unteren Wand des Gehäuses angebracht ist, um einen Teil der in der Mitte des Wirbels befindlichen Flüssigkeit zu entnehmen und zu filtern, wobei der Filterstoff (14) eine zentrale Längsleitung (15) enthält, die in mindestens einen Längsausgang (16) für gefilterte Flüssigkeit mündet,
**dadurch gekennzeichnet,**
**dass** das Gehäuse (10) im Bereich des tangentialen Flüssigkeitseinlasses (12) eine spiralförmige Innenfläche aufweist, um einen Einlass-Schneckenbogen (31) zu bilden.

2. Selbstreinigende Vorrichtung nach Anspruch 1,
**dadurch gekennzeichnet,**
**dass** das Gehäuse (10) im Bereich des tangentialen Flüssigkeitsausgangs (13) eine spiralförmige Innenfläche aufweist, um einen Ausgangs-Schneckenbogen (32) zu bilden.

3. Selbstreinigende Vorrichtung nach Anspruch 2,
**dadurch gekennzeichnet,**
**dass** das Gehäuse (10) zwischen dem Einlass- und dem Ausgang-Schneckenbogen (31, 32) einen anwachsenden Innenquerschnitt aufweist und der Filterstoff (14) einen kleiner werdenden Innenquerschnitt aufweist.

4. Selbstreinigende Vorrichtung nach Anspruch 1,
**dadurch gekennzeichnet,**
**dass** der Filterstoff (14) von einem ersten und einem zweiten Filterbereich (21, 22) mit unterschiedlichen Rückhaltevermögen gebildet wird, wobei der erste Filterbereich (21) eine erste zentrale Längsleitung enthält, die in einen ersten Längsausgang (16) für gefilterte Flüssigkeit mündet, welcher in der oberen Wand des Gehäuses (10) ausgeführt ist, wobei der zweite Filterbereich (22) eine zweite zentrale Längsleitung enthält, die in einen zweiten Längsausgang (17) für gefilterte Flüssigkeit mündet, welcher in der unteren Wand des Gehäuses (10) ausgeführt ist.

5. Selbstreinigende Vorrichtung nach Anspruch 4,
**dadurch gekennzeichnet,**
**dass** der erste und der zweite Filterbereich (21, 22) durch eine dichte Trennwand (23) voneinander getrennt sind.

6. Anwendung der selbstreinigenden Vorrichtung nach einem der Ansprüche 1 bis 3 in einem Kraftstoffeinspritzsystem,
**dadurch gekennzeichnet,**
**dass** der tangentiale Einlass (12) für Flüssigkeit hinter einer Hochdruckpumpe angeschlossen ist, der tangentiale Ausgang (13) für Flüssigkeit vor einem Hauptstromfilter (43) über ein Umleitventil (47) angeschlossen ist, der Längsausgang für gefilterte Flüssigkeit an eine Kraftstoff-Dosiereinrichtung (45) angeschlossen ist.

7. Anwendung der selbstreinigenden Vorrichtung nach Anspruch 5 in einem Kraftstoffeinspritzsystem,
**dadurch gekennzeichnet,**
**dass** der tangentiale Einlass (12) für Flüssigkeit hinter einer Hochdruckpumpe angeschlossen ist, der tangentiale Ausgang (13) für Flüssigkeit vor einem Hauptstromfilter (43) über ein Umleitventil (47) angeschlossen ist, der erste Längsausgang (16) für gefilterte Flüssigkeit an eine Kraftstoff-Dosiereinrichtung (45) angeschlossen ist, der zweite Längsausgang (17) für gefilterte Flüssigkeit an Regeleinrichtungen angeschlossen ist.
